# EUROPÄISCHE PATENTSCHRIFT

(11) **EP 0 898 660 B1**
(45) Veröffentlichungstag und Bekanntmachung des Hinweises auf die Patenterteilung: **06.02.2002**
(21) Anmeldenummer: 97920594.5
(22) Anmeldetag: 12.04.1997
(51) Int. Cl.: F16D 1/09

(54) **KONUSSPANNSATZ**
CONE CLAMPING SET
SYSTEME DE SERRAGE A CONES

(30) Priorität: 15.05.1996 DE 29608751 U
(43) Veröffentlichungstag der Anmeldung: 03.03.1999
(73) Patentinhaber: Müllenberg, Ralph, D-41516 Grevenbroich (DE)
(72) Erfinder: Müllenberg, Ralph, D-41516 Grevenbroich (DE)
(74) Vertreter: Palgen, Peter, Dipl.-Phys. Dr.
(86) Internationale Anmeldenummer: DE9700740
(87) Internationale Veröffentlichungsnummer: WO9743556

(56) Entgegenhaltungen:
- DE-U- 7 512 290

## Beschreibung

Die Erfindung bezieht sich auf einen Konusspannsatz der dem Oberbegriff des Anspruchs 1 entsprechenden Art.

Derartige Spannsätze sind sowohl als einfache Spannsätze und als Doppelkonusspannsätze vielfach bekannt, z.B. aus den DE-GM 71 33 914, 77 27 308 und 75 12 290 sowie aus der US-PS 3 958 888.

Das Problem der Erfindung hat sich an Spannsätzen ergeben, die Fig. 4 der US-PS 3 958 888 entsprechen. Es ist dabei der Doppelkonusring der äußere Konusring und liegt mit seiner zylindrischen Außenumfangsfläche in einer Nabenbohrung an. Die konischen Innenumfangsflächen sind so angeordnet, daß die größte Wandstärke des Doppelkonusrings in der Mitte liegt. In der Mitte ist ein Zentriersteg vorgesehen, der bis auf die Welle reicht und somit eine Zentrierung der Nabe gegenüber der Welle ermöglicht. Die beiden einzelnen Konusringe werden von den Spannschrauben axial durchgriffen, die Durchgangsbohrungen in dem einen Konusring und in dem Zentriersteg durchgreifen und in Gewindebohrungen des gegenüberliegenden Konusrings eingreifen. Die einzelnen Konusringe haben, weil sie die Spannschrauben aufnehmen, radial in dem Übertragungsbereich der Klemmkräfte im wesentlichen größere Wandstärke als der Doppelkonusring, so daß sich dieser leicht verformt und bereitwillig an den Innenumfang der Ausnehmung des äußeren Bauteils anlegt. "Dünnwandig" soll hier und im weiteren Zusammenhang bedeuten, daß die radiale Wandstärke an jeder Stelle der Zone, in der die radialen Kräfte übertragen werden, höchstens die Hälfte der radialen Wandstärke des inneren Konusrings beträgt, im allgemeinen jedoch nur ein Drittel oder ein Viertel dieser Wandstärke.

Wenn mit einem Konusspannsatz dieser Art z.B. eine Bandantriebstrommel für Bandförderer auf einer Welle befestigt ist, erfährt die Welle durch den Zug des Förderbandes eine erhebliche Biegebeanspruchung, die zu einer merklichen Durchbiegung der Welle führen kann. Dies wiederum hat zur Folge, daß auf der biegeäußeren Seite die Außenumfangsfläche des äußeren Doppelkonusrings von der Innenumfangsfläche der Nabe geringfügig abheben kann, auch wenn der Konusspannsatz anfänglich bei erfolgter Verspannung am Rand vollkommen dicht war.

Dieses zeitweilige Abheben des äußeren Doppelkonusrings von der Nabenbohrung reicht aus, um an dieser Stelle Feuchtigkeit eindringen zu lassen, die dort zu dem gefürchteten Passungsrost führt, der eine nachträgliche Demontage des Konusspannsatzes unmöglich machen kann, weil die Fügeflächen zusammengerostet sind. Das Wasser kommt bei dem Beispiel der Bandantriebstrommel von der axial äußeren Seite, die der Witterung ausgesetzt ist.

Die Abhebestelle bleibt bei der Drehung der Welle an der gleichen Stelle, so daß sich eine ringförmige Rostzone bildet.

Das Eindringen der Feuchtigkeit und die anschließende Bildung von Passungsrost tritt primär an der Außenseite des Konusspannsatzes, also in einer am axialen Rand desselben gelegenen Zone an der in der Nabe anliegenden radial äußeren Umfangsfläche ein, weil dort die geringere Flächenpressung herrscht und die durch die Biegung auftretenden Kräfte die Klemmkräfte an dieser Stelle zuerst übersteigen.

Der Erfindung liegt die Aufgabe zugrunde, ein derartiges Auftreten von Passungsrost zu vermeiden.

Diese Aufgabe wird für zwei verschiedene Bauformen von Konusspannsätzen durch die in Anspruch 1 bzw. 3 wiedergegebenen Erfindungen gelöst, die entsprechend den Ansprüchen 2 bzw. 4 weiter ausgestaltet sein können.

Normalerweise sind die axialen Zonen, in denen die radialen Klemmkräfte übertragen werden, an dem inneren Bauteil, zum Beispiel der Welle, und dem äußeren Bauteil, zum Beispiel der Nabe, ungefähr gleich. Das führt dazu, daß die Flächenpressung außen wegen des größeren Radius und der entsprechend größeren für die Kraftübertragung zur Verfügung stehenden Fläche geringer ist als innen, d.h. auf der Welle. Die der Erfindung zugrundeliegende Idee besteht darin, die für die Übertragung der radialen Kräfte zur Verfügung stehende axiale Zone außen zu verkleinern und auf diese Weise die Flächenpressung außen künstlich zu erhöhen. Dadurch überschreiten auch höhere Biegekräfte die erhöhten Klemmkräfte bei den normal vorkommenden Biegungszuständen nicht mehr und bleibt die Anlage des Spannsatzes im äußeren Randbereich erhalten, so daß keine den Passungsrost verursachende Feuchtigkeit eindringen kann. Das bedeutet, daß höhere Biegungen ertragen werden können, ohne daß die Funktion beeinträchtigt wird. Die Erfahrung zeigt, daß bei den in der Praxis vorkommenden Biegebelastungen eine an der biegeäußeren Seite bei einer Biegung verbleibende Anlagespannung bzw. Flächenpressung von 70-80 N/mm² noch ausreicht, um ein Eindringen von Wasser zu verhindern, und somit passungsrostverhindernd ist. Diese verbleibende Flächenpressung tritt durch die erfindungsgemäße Gestaltung erst bei größeren Biegemomenten auf. Die künstliche Erhöhung der Flächenpressung in der Ausnehmung des äußeren Bauteils trägt zu einer besseren Abstützung in dieser Ausnehmung bei und entlastet überdies die Spannschrauben.

Die Verkleinerung der äußeren Zone kann beispielsweise so erfolgen, daß die Flächenpressung in der Ausnehmung des äußeren Bauteils, also zum Beispiel der Nabe, etwa die gleiche Größe hat wie auf dem inneren Bauteil, also zum Beispiel der Welle (Anspruch 5).

Die Wirkung· der Erfindung wird durch das Merkmal des Anspruchs 6 besonders konsequent zur Geltung gebracht.

Es wird nämlich dadurch verhindert, daß die Feuchtigkeit entlang des Schlitzes in das Innere des Spannsatzes eindringen kann.

In der Zeichnung sind Ausführungsbeispiele der Erfindung dargestellt.

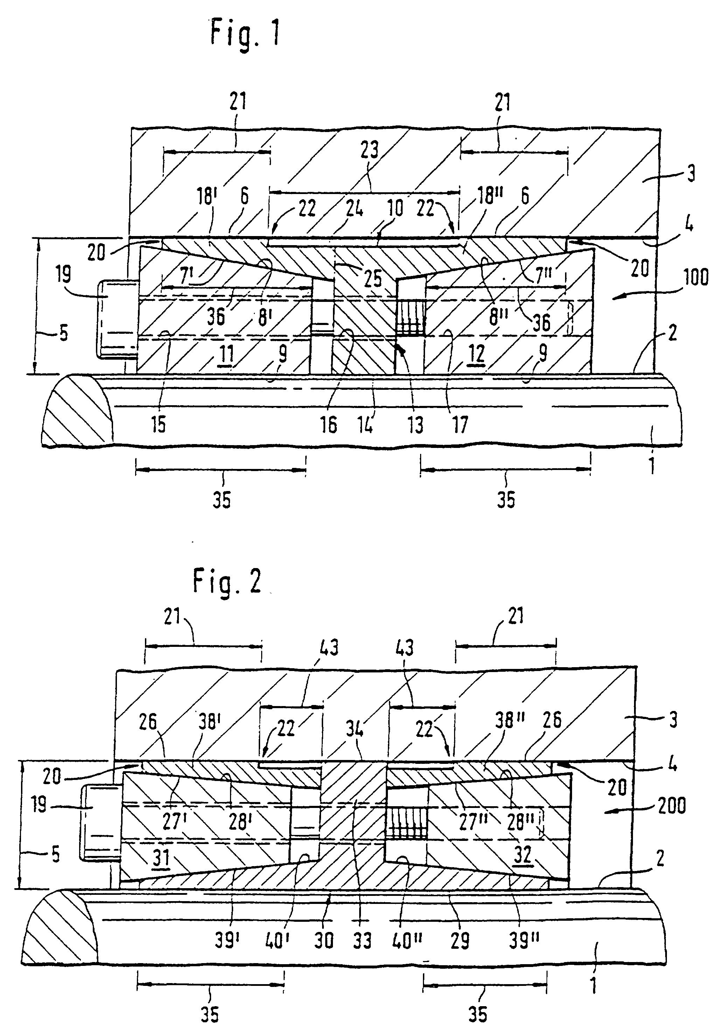

Fig. 1 und 2 zeigen durch die Achse einer Spannanordnung gehende Teilschnitte des oberen Teils einer solchen Spannanordnung.

In Fig. 1 dient der als Ganzes mit 100 bezeichnete Doppelkonus-Spannsatz zur Verspannung einer ein inneres Bauteil darstellenden Welle 1 mit einem zylindrischen Außenumfang 2 mit einem ein äußeres Bauteil mit einer Ausnehmung mit einer zylindrischen Innenumfangsfläche 4 darstellenden Nabe 3. Der Durchmesser des Innenumfangs 4 ist größer als der Außendurchmesser der Welle 1, und in dem gebildeten ringförmigen Zwischenraum 5 ist der Spannsatz 100 untergebracht.

Der Spannsatz 100 umfaßt einen Doppelkonusring 10 mit einer zylindrischen Außenumfangsfläche 6 und zwei konischen Innenumfangsflächen 7',7", die so angeordnet sind, daß ihre größte radiale Wandstärke axial gesehen in der Mitte liegt. Mit den Konusflächen 7',7" wirken die äußeren Konusflächen 8',8" von zwei einzelnen Konusringen 11,12 zusammen, die mit ihren zylindrischen Innenumfangsflächen 9 in einem Anlagebereich auf der Außenumfangsfläche 2 der Welle 1 anliegen, der gleichzeitig die Zone 35 der Kraftübertragung bildet. Die Konusringe 11,12 sind radial gesehen, wesentlich dickwandiger als der Doppelkonusring 10 im Bereich seiner Konus flächen 7',7'''. Das Verhältnis der radialen Erstreckungen beträgt an jeder Stelle der Konusfläche 7' mindestens drei zu eins. Der Doppelkonusring 10 umfaßt gewissermaßen zwei miteinander verbundene dünnwandige Konusringteile 18',18".

Zwischen den Konusflächen 7',7" weist der Doppelkonusring 10 einen radial nach innen vorspringenden Zentriersteg 13 auf, der mit seiner zylindrischen Innenumfangsfläche 14 auf der Außenumfangsfläche 2 der Welle 1 aufsitzt und dazu dient, die Nabe 3 auf der Welle 1 zu zentrieren. Über den Umfang verteilt sind dicht beieinander axiale Spannschrauben 19 vorgesehen, die Durchgangsbohrungen 15 in dem Konusring 11 und 16 in dem Zentriersteg 13 durchgreifen und in Gewindebohrungen 17 in dem Konusring 12 eingreifen. Beim Anziehen der Spannschrauben 19 werden die Konusringe 11,12 gegeneinandergezogen und gleiten dabei mit ihren Konusflächen 8',8" an den den gleichen Konuswinkel und einen entsprechenden Radius aufweisenden Konusflächen 7',7" des Doppelkonusrings 10 ab, wobei sich die Konusringpaare 18',11 bzw. 18",12 radial aufweiten und mit den zylindrischen Flächen 6 bzw. 9 an den zylindrischen Flächen 4 bzw. 2 unter erheblicher Flächenpressung zur Anlage kommen, so daß die Teile 1 und 3 miteinander verklemmt werden.

Die Konuswinkel der Konusflächen 7',8' bzw. 7",8" können außerhalb oder innerhalb des Selbsthemmungsbereichs liegen; im letzteren Fall müssen axiale Abdrückschrauben vorhanden sein, wenn der Spannsatz 100 wieder demontierbar sein soll.

Zwei kritische Stellen am radial und axial äußeren Rand des Doppelkonusrings 10 sind in Fig. 1 mit 20 bezeichnet. Bei starker Durchbiegung der Welle 1 kann es geschehen, daß die dadurch entstehenden Kräfte größer werden als die radialen Klemmkräfte und der Doppelkonusring in den äußeren Bereichen seiner Konusringteile 18,18' von der Innenumfangsfläche 4 abhebt. Dort kann dann Feuchtigkeit eindringen, die zu Passungsrost führen kann, der eine Demontage des Konusrings 100 unmöglich machen oder jedenfalls sehr erschweren kann.

Die Konusringe 11,12 und die Konusringteile 18',18" liegen normalerweise auf axialen Strecken 36 aneinander an. Besonders bei stark angezogenem Spannsatz 100 oder ungünstiger Lage der Toleranzen nähert sich die Strecke 36 der Länge der Konusringe 11,12. Die Flächenpressungen an den Konusflächen 7',8' und 7",8" bzw. zwischen der zylindrischen Außenumfangsfläche 6 und dem Innenumfang 4 sind dann wegen der größeren Radien deutlich niedriger als zwischen den Innenumfangsflächen 9 und der Außenumfangsfläche 2 der Welle 1.

Um die Flächenpressung außen künstlich zu erhöhen und dem Abheben an den Stellen 20 entgegenzuwirken, sind im Bereich der Strecken 36 in der zylindrischen Außenumfangsfläche des Doppelkonusrings 10 Absätze 22 vorgesehen, zwischen denen die Außenumfangsfläche 6 auf einer Strecke 23 auf einen geringeren Radius bzw. Durchmesser abgesetzt ist. Die Tiefe der Absetzung bzw. flachen Umfangsnut 24 muß nur so groß sein, daß in der Strecke 23 keine Anlage des Doppelkonusrings 10 an der Innenumfangsfläche 4 mehr stattfindet. Eine Größenordnung von 1 mm genügt. Es ist wesentlich, daß die Absätze 22 in dem Abschnitt liegen, in dem ohne die Absätze 22 radiale Klemmkräfte übertragen würden.

Die in der Strecke 23 gelegenen Teile der Umfangsfläche 6 hätten normalerweise an der Übertragung von radialen Klemmkräften mitgewirkt, besonders in den sich mit den Konusringen 11,12 axial überdeckenden Bereichen. Bei gleichem Anzug der Spannschrauben 19 verteilen sich nunmehr diese Anteile auf Zonen 21, d.h. die stehengebliebenen axial äußeren Bereiche der äußeren Umfangsfläche 6 im Bereich der Teilkonusringe 18',18", so daß die radiale Anlage in der Nähe der kritischen Stellen 20 stärker wird und durch etwaige Biegungen der Welle 1 hervorgerufene auf Abheben der Teilkonusringe 18',18" von der Innenumfangsfläche 4 gerichtete Kräfte diese Anlagekräfte nicht mehr oder nicht mehr so leicht übersteigen können. Dadurch bleibt der Spannsatz 100 an den axial äußeren Rändern des Doppelkonusrings 10 gegenüber der Innenumfangsfläche 4 geschlossen, so daß keine Feuchtigkeit eindringen kann. Die Zonen 21 sind axial kürzer als die Länge 35 der Konusringe 11,12, die der Zone der Kraftübertragung auf der Welle 1 entsprechen.

Zum gleichen Zweck ist der Doppelkonusring 10 jedenfalls im Bereich seiner Teilkonusringe 18',18" nicht geschlitzt, damit nicht durch den Schlitz Feuchtigkeit eindringen kann. Der Zentriersteg 13 und die beiden Konusringe 11,12 können hingegen zur Vermeidung von Kraftverlusten geschlitzt sein.

Der in Fig. 1 gezeichnete Doppelkonusspannsatz 100 ist nur ein Ausführungsbeispiel; es könnte sich auch um einen einfachen Konusspannsatz handeln, der z.B. dadurch entsteht, daß an der durch die strichpunktierte Linie 25 gekennzeichneten Stelle der Doppelkonusring 10 abgeschnitten gedacht wird. Die Funktion, den Spannsatz bei Biegebeanspruchung an der rechten kritischen Stelle 20 bei einer starken Biegung der Welle 1 geschlossenzuhalten, ist auch dann gegeben.

In Fig. 2 ist ein Doppelkonusspannsatz 200 wiedergegeben, bei dem funktionell entsprechende Teile die gleichen Bezugszahlen tragen. Es ist ein Doppelkonusring 30 vorgesehen, der in dem Fall ein innerer Konusring ist und mit seiner zylindrischen Innenumfangsfläche 29 auf der Welle 1 anliegt. Der Zentriersteg 33 springt in diesem Fall nach außen vor und liegt mit seiner zylindrischen Außenumfangsfläche 34 an der zylindrischen Innenumfangsfläche 4 des äußeren Bauteils bzw. der Nabe 3 an. Die beiden Konusringe 31,32, an denen die Spannschrauben 19 angreifen, sind in diesem Fall sowohl mit konischen Innenumfangsflächen 39',39", die mit den konischen Außenumfangsflächen 40',40" des Doppelkonusrings 30 zusammenwirken, als auch mit konischen Außenumfangsflächen 28',28" versehen, die mit den konischen Innenumfangsflächen 27',27" zweier separater ungeschlitzter äußerer Konusringe 38',38" zusammenwirken, die mit ihren zylindrischen Außenumfangsflächen 26 am Innenumfang 4 der Nabe 3 anliegen. Die äußeren Konusringe 38' und 38" liegen mit ihren inneren Stirnseiten gegen den Zentriersteg 33 an. Die kritischen Stellen 20 sind hier am radial und axial äußeren Rand der Konusringe 38' und 38" gelegen.

Auch hier sind in den zylindrischen Außenumfangsflächen 26 in den Anlagebereichen Absätze 22 vorgesehen, an denen die zylindrischen Außenumfangsflächen 26 zum dickwandigeren inneren Ende der Konusringe 38',38" hin auf einer Strecke 43 auf einen geringeren Durchmesser abgesetzt sind, so daß dort keine Anlage stattfindet und sich die Anlagekraft bzw. Flächenpressung in den verbleibenden Zonen 21 der Übertragung radialer Kraft erhöht, um die kritischen Stellen 20 vor einem Aufklaffen bei einer Biegebeanspruchung der Welle 1 zu schützen. Auch hier ist die axiale Länge der Zone 21 geringer als die axiale Länge der Zone 35, in der die inneren Konusringe 31,32 die radiale Klemmkraft innen gegen die Welle hin übertragen.

## Patentansprüche

1. Konusspannsatz (100) zum Verbinden eines inneren Bauteils mit zylindrischer Außenumfangsfläche (2), insbesondere einer Welle (1), mit einem äußeren Bauteil mit einer Ausnehmung mit zylindrischer Innenumfangsfläche (4), insbesondere einer Nabe (3), welcher zur Anordnung in dem radialen Zwischenraum (5) zwischen der zylindrischen Auβenumfangsfläche (2) des inneren Bauteils und der zylindrischen Innenumfangsflache (4) der Ausnehmung des äußeren Bauteils bestimmt ist,
mit zwei inneren Konusringen (11,12) mit jeweils einer zylindrischen, zur Anlage auf der zylindrischen Außenumfangsfläche (2) des inneren Bauteils (1) bestimmten Innenumfangsfläche (9) und einer konischen Außenumfangsfläche (8',8"),
mit einem dünnwandigen äußeren Doppelkonusring (10;18',18") mit konischen, auf den Außenumfangsflächen (8',8") der inneren Konusringe (11,12) anliegenden, gleichen Konuswinkel aufweisenden inneren Umfangsflächen (7',7"), deren dickwandige Enden einander zugewandt sind, und einer zylindrischen, zur Anlage an der Innenumfangsfläche (4) des äußeren Bauteils (3) bestimmten Außenumfangsfläche (6)
und mit über den Umfang verteilten axialen Spannschrauben (19), mittels deren die Konusringe (11,12) unter Abgleiten über die Konusflächen (7',8';7",8") und radialer Aufweitung axial gegeneinander ziehbar sind, unter Erzeugung radialer gegen die Außenumfangfläche (2) des inneren Bauteils (1) und die Innenumfangfläche (4) der Ausnehmung des äußeren Bauteils (3) wirkender Klemmkräfte,
**dadurch gekennzeichnet,**
**daß** der Doppelkonusring (10) in seiner zylindrischen Außenumfangsfläche (6) etwa in der Mitte deren axialer Erstreckung auf einer axialen Strecke (23) eine in Umfangsrichtung durchgehende radiale Absetzung (24) aufweist, so daß die axiale Erstreckung der Zone (21) der zylindrischen Außenumfangsfläche (6) des äußeren Konusrings (10;18',18"), in der die radialen Klemmkräfte auf die Innenumfangsfläche (4) der Ausnehmung des äußeren Bauteils übertragen werden, geringer als die axiale Erstreckung der Zone (35) ist, in der die radialen Klemmkräfte gegen die Außenumfangsfläche (2) des inneren Bauteils wirken.

2. Konusspannsatz nach Anspruch 1, **dadurch gekennzeichnet, daß** der Doppelkonusring (10;18',18'') in der Mitte einen radial nach innen vorspringenden Zentriersteg (13) aufweist, der mit seiner zylindrischen Innenumfangsfläche (14) zur Anlage auf der Außenumfangsfläche (2) des inneren Bauteils (1) bestimmt und in Durchgangsbohrungen (15) von den Spannschrauben (19) durchgriffen ist.

3. Konusspannsatz (200) zum Verbinden eines inneren Bauteils mit zylindrischer Außenumfangsfläche (2), insbesondere einer Welle (1), mit einem äußeren Bauteil mit einer Ausnehmung mit zylindrischer Innenumfangsfläche (4), insbesondere einer Nabe (3), welcher zur Anordnnung in dem radialen Zwischenraum (5) zwischen der zylindrischen Auβenumfangsfläche (2) des inneren Bauteils und der zylindrischen Innenumfangsfläche (4) der Ausnehmung des äußeren Bauateils bestimmt ist,
mit zwei dünnwandigen Konusringen (38',38'') mit jeweils einer konischen Innenumfangsfläche (27',27''), deren dickwandige Enden einander zugewandt sind und einer zylindrischen Außenumfangsfläche (26),
mit zwei inneren Konusringen (31,32) mit jeweils einer konischen, auf den Innenumfangsflächen (27',27'') der äußeren Konusringe (38',38'') anliegenden, gleichen Konuswinkel aufweisenden äußeren Umfangsflächen (28',28'') und einer Innenumfangsfläche (39',39'')
und mit über den Umfang verteilten axialen Spannschrauben (19), mittels deren die Konusringe (31,32) unter Abgleiten über die Konusflächen (27',28';27'',28'') und radialer Aufweitung axial gegeneinander ziehbar sind, unter Erzeugung radialer gegen den Außenumfangs des inneren Bauteils und den Innenumfang der Ausnehmung des äußeren Bauteils wirkender Klemmkräfte,
**dadurch gekennzeichnet,**
**daß** die Außenumfangsflächen (26) der äußeren Konusringe (38',38'') über eine axiale Strecke (43) auf einen kleineren Durchmesser abgesetzt sind, so daß die axiale. Erstreckung der Zone (21) der zylindrischen Außenumfangsfläche (26) der äußeren Konusringe, in der die radialen Klemmkräfte auf die Innenumfangsfläche (4) der Ausnehmung des äußeren Bauteils übertragen werden, geringer als die axiale Erstreckung der Zone (35) ist, in der die radialen Klemmkräfte gegen die Außenumfangsfläche (2) des inneren Bauteils wirken.

4. Konusspannsatz nach Anspruch 3, **dadurch gekennzeichnet, daß** ein innerer Doppelkonusring (30) vorgesehen ist, der mit seiner zylindrischen Innenumfangsfläche (29) zur Anlage an der zylindrischen Außenumfangsfläche (2) des inneren Bauteils bestimmt ist und in der Mitte einen radial nach außen vorspringenden Zentriersteg (33) aufweist, der mit seiner zylindrischen Außenumfangsfläche (34) zur Anlage an der zylindrischen Innenumfangsfläche (4) des äußeren Bauteils (3) zwischen den äußeren Konusringen (38',38") bestimmt ist.

5. Konusspannsatz nach einem der Ansprüche 1 bis 4, **dadurch gekennzeichnet, daß** die axialen Erstreckungen der Zonen (21) und (35) so aufeinander abgestimmt sind, daß die Flächenpressungen am Innenumfang des äußeren Bauteils und am Außenumfang des inneren Bauteils im wesentlichen gleich sind.

6. Konusspannsatz nach einem der Ansprüche 1 bis 5, **dadurch gekennzeichnet, daß** die äußeren Konusringe (18',18";38',38") in Achsrichtung ungeschlitzt sind.

## Claims

1. Cone clamping set (100) for connecting an inner component having a cylindrical outer surface (2), in particular a shaft (1), to an outer component having an opening with a cylindrical inside peripheral surface (4), in particular a hub (3), designed for mounting in the radial gap (5) between the cylindrical outer surface (2) of the inner component and the cylindrical inside surface (4) of the opening in the outer component,
with two inner cone rings (11, 12) each having a cylindrical inner surface (9) designed for engagement against the cylindrical outer surface(2) of the inner component (1)and a conical outer surface (8', 8"),
with a thin-walled outer double cone ring (10; 18', 18") with conical inner peripheral surfaces (7', 7") engaging the outer surfaces (8', 8") of the inner cone rings (11, 12) and having the same cone angle, the thick-walled ends of these rings being towards one another, and a cylindrical outer surface (6) designed for engagement against the inner surface (4) of the outer component (3)
and with circumferentially spaced axial clamping screws (19), by means of which the cone rings (11, 12) are drawn axially together, with relative sliding over the conical surfaces (7', 8'; 7", 8") and radial expansion, producing clamping forces acting radially against the outer surface (2) of the inner component (1) and the inner surface (4) of the opening in the outer component (3),
**characterised in that**
the double cone ring (10) has in its cylindrical outer surface (6) about in the middle of its axial extent and on an axial stretch (23) a circumferentially continuous radial cutback (24), so that the axial extent of the zone (21) of the cylindrical outer surface (6) of the outer cone ring (10; 18', 18") in which the radial clamping forces are transmitted to the inner surface (4) of the opening in the outer component is smaller than the axial extent of the zone (35) in which the radial clamping forces act against the outer surface (2) of the inner component.

2. Cone clamping set according to Claim 1, **characterised in that** the double cone ring (10; 18', 18") has in the middle a radially inwardly projecting locating flange (13) of which the cylindrical inner surface (14) is designed to engage the outer surface (2) of the inner component (1) and through which there are bores (15) through which the clamping screws (19) pass.

3. Cone clamping set (200) for connecting an inner component having a cylindrical outer surface (2), in particular a shaft (1), to an outer component having an opening with a cylindrical inner surface (4), in particular a hub (3), which is designed to be mounted in the radial gap (5) between the cylindrical outer surface (2) of the inner component and the cylindrical inner surface (4) of the opening in the outer component,
with two thin-walled cone rings (38', 38") each with a conical inner surface (27', 27"), of which the thick-walled ends are towards one another and a cylindrical outer surface (26),
with two inner cone rings (31, 32) each with a conical outer surface (28', 28 ") engaging the inner surface (27', 27") of the outer cone rings (38', 38") and having the same cone angle and an inner surface (39', 39"),
and with circumferentially spaced axial clamping screws (19), by means of which the cone rings (31, 32) can be axially drawn together with sliding over the conical surfaces (27', 28'; 27", 28") and radial expansion, producing clamping forces acting radially against the outer periphery of the inner component and the inner periphery of the opening in the outer component,
**characterised in that**
the outer surfaces (26) of the outer cone rings (38', 38") are cut back to a smaller diameter over an axial stretch (43), so that the axial extent of the zone (21) of the cylindrical outer surfaces (26) of the outer cone rings in which the radial clamping forces are transmitted to the inner surface (4) of the opening in the outer component is smaller than the axial extent of the zone (35) in which the radial clamping forces act against the outer surface (2) of the inner component.

4. Cone clamping set according to Claim 3, **characterised in that** an inner double cone ring (30) is provided, which is designed to have its cylindrical inner surface (29) engaging against the cylindrical outer surface (2) of the inner component and has in the middle a radially outwardly projecting locating flange (33), which has its cylindrical outer surface (34) designed for engagement against the cylindrical inner surface (4) of the outer component (3) between the outer cone rings (38', 38").

5. Cone clamping set according to one of Claims 1 to 4, **characterised in that** the axial extents of the zones (21) and (35) are matched to one another so that the pressures per unit area on the inside of the outer component and on the outside of the inner component are substantially equal.

6. Cone clamping set according to one of Claims 1 to 5, **characterised in that** the outer cone rings (18', 18"; 38', 38") are not slit in an axial direction.

## Revendications

1. Système de serrage à cône (100) destiné à relier une pièce intérieure à une surface périphérique extérieure cylindrique (2), en particulier, un arbre (1), à une pièce extérieure avec une cavité, avec une surface périphérique intérieure cylindrique (4), en particulier d'un moyen (3) destiné à être installé dans l'espace intermédiaire radial (5) entre la surface périphérique extérieure cylindrique (2) de la pièce intérieure et la surface périphérique intérieure cylindrique (4) de la cavité de la pièce extérieure,
- au moyen de deux bagues coniques intérieures (11, 12) avec, respectivement une surface périphérique intérieure cylindrique (9), pour appui sur la surface périphérique extérieure (2) de la pièce intérieure (1) et une surface périphérique extérieure conique (8', 8"),
- avec une bague conique double extérieure, à parois minces (10 ; 18' ; 18") ayant des surfaces périphériques intérieures (7', 7") s'appuyant sur les surfaces périphériques extérieures (8', 8") des bagues coniques intérieures (11, 12), et présentant le même angle conique, dont les extrémités à forte épaisseur sont tournées l'une vers l'autre, et ayant une surface périphérique extérieure cylindrique (6) destinée à s'appuyer sur la surface périphérique intérieure (4) de la pièce extérieure (3), et
- avec des vis de serrage axiales (19) réparties sur la périphérie, au moyen desquelles les bagues coniques (11, 12), par glissement sur les surfaces coniques (7', 8' ; 7", 8") et par élargissement radial, s'attirent l'une contre l'autre, en engendrant des forces de serrage radiales sur la surface périphérique extérieure (2) de la pièce intérieure (1) et la surface périphérique intérieure (4) de la cavité de la pièce extérieure (3),
**caractérisé en ce que**
le bague conique double (10) dans sa surface périphérique extérieure cylindrique (6), présente approximativement dans le milieu de sa longueur axiale, tout au long d'une ligne axiale (23), un retrait radial (24) traversant en direction périphérique,
de sorte que l'étendue axiale de la zone (21) de la surface périphérique extérieure cylindrique (6) de la bague conique extérieure (10 ; 18', 18") dans laquelle les forces de serrage radiales se transmettent sur la surface périphérique intérieure (4) de la cavité de la pièce extérieure, est inférieure à l'étendue axiale de la zone (35), dans laquelle les forces de serrage s'exercent sur la surface périphérique extérieure (2).

2. Système de serrage à cône selon la revendication 1,
**caractérisé en ce que**
la bague conique double (10 ; 18', 18") présente en son milieu une barrette de centrage (13) dépassant vers l'intérieur en direction radiale, dont la surface périphérique intérieure cylindrique (14), s'appuie sur la surface périphérique extérieure (2) de la pièce intérieure, et qui est traversée par les vis de serrage (19) passant dans des taraudages (15).

3. Système de serrage à cône (200) pour relier une pièce intérieure, en particulier un arbre (1), comportant une surface périphérique extérieure cylindrique (2), à une pièce extérieure avec une cavité ayant une surface périphérique intérieure cylindrique (4), en particulier un moyeu (3), logé dans l'espace radial intermédiaire (5) entre la surface périphérique extérieure cylindrique (2) de la pièce intérieure et la surface périphérique intérieure cylindrique (4) de la cavité de la pièce extérieure,
- avec deux bagues coniques extérieures à parois minces (38', 38") ayant chacune une surface périphérique intérieure conique (27', 27"), dont les extrémités à parois épaisses sont tournées l'une vers l'autre et une surface périphérique extérieure cylindrique (26),
- avec deux bagues coniques (31, 32) ayant chacune une surface extérieure (28', 28") conique s'appuyant sur les surfaces périphériques intérieures (27', 27") des bagues coniques extérieures (38', 38"), ayant le même angle conique, et une surface périphérique intérieure (39', 39"), et
- avec des vis de serrage (19) réparties axialement sur la périphérie, au moyen desquelles les bagues coniques (31, 32) sont rapprochées l'une contre l'autre, en sens radial, par glissement sur les surfaces coniques (27', 28' ; 27", 28 ") et par élargissement radial, engendrant alors des forces de serrage radiales contre la périphérie extérieure de la pièce intérieure et la périphérie intérieure de la cavité de la pièce extérieure,
**caractérisé en ce que**
le diamètre des surfaces périphériques extérieures (26) des bagues coniques extérieures (38', 38") subit une diminution le long d'une ligne axiale (43), de sorte que l'étendue axiale de la zone (21) de la surface périphérique extérieure cylindrique (26) des bagues coniques extérieures, dans lesquelles se transmettent les forces de serrage radiales vers la surface périphérique intérieure (4) de la cavité de pièce extérieure, est inférieure à la longueur axiale de la zone (35) dans laquelle ces forces de serrage s'appliquent sur la surface périphérique extérieure (2) de la pièce intérieure.

4. Système de serrage à cône selon la revendication 3,
**caractérisé en ce qu'**
une bague conique intérieure double (30) est prévue pour s'appuyer par sa surface périphérique intérieure cylindrique (29) sur la surface périphérique extérieure cylindrique (2) de la pièce intérieure, et comporte en son milieu, une barrette de centrage (33) radiale, dépassant vers l'extérieur, s'appuyant par sa surface périphérique extérieure cylindrique (34) sur la surface périphérique intérieure cylindrique (4) de la pièce extérieure (3) entre les bagues coniques extérieures (38', 38").

5. Système de serrage à cône selon l'une des revendications 1 à 4,
**caractérisé en ce que**
les distances des zones (21) et (35) sont déterminés l'une par rapport à l'autre de façon telle que les pressions superficielles sur la périphérie intérieure de la pièce extérieure et sur la périphérie extérieure de la pièce intérieure soient approximativement les mêmes.

6. Système de serrage à cône selon l'une des revendications 1 à 4,
**caractérisé en ce que**
les bagues coniques extérieures (18', 18" ; 38', 38") ne sont pas fendues dans le sens axial.
